# EUROPÄISCHE PATENTSCHRIFT

(11) **EP 2 870 384 B1**
(45) Veröffentlichungstag und Bekanntmachung des Hinweises auf die Patenterteilung: **18.04.2018**
(21) Anmeldenummer: 13728146.5
(22) Anmeldetag: 04.06.2013
(51) Int. Cl.: F16H 61/04

(54) **VERFAHREN ZUM BETREIBEN EINES AUTOMATIKGETRIEBES**
METHOD FOR OPERATING AN AUTOMATIC TRANSMISSION
PROCÉDÉ DE FONCTIONNEMENT D'UNE BOITE DE VITESSES AUTOMATIQUE

(30) Priorität: 05.07.2012 DE 102012211673
(43) Veröffentlichungstag der Anmeldung: 13.05.2015
(73) Patentinhaber: ZF Friedrichshafen AG, 88046 Friedrichshafen (DE)
(72) Erfinder: STEINHAUSER, Klaus, 88079 Kressbronn (DE); HERBETH, Valentine, 88046 Friedrichshafen (DE)
(86) Internationale Anmeldenummer: PCT/EP2013/061417
(87) Internationale Veröffentlichungsnummer: WO 2014/005775

(56) Entgegenhaltungen:
- WO-A1-2010/081819
- WO-A1-2010/081820
- WO-A1-2011/015466
- WO-A1-2011/085924
- WO-A1-2012/079845

## Beschreibung

Die Erfindung betrifft ein Verfahren zum Betreiben eines Automatikgetriebes nach dem Oberbegriff des Patentanspruchs 1. WO2010-081819 offenbart einen Verfahren nach dem Oberbegriff des Anspruchs 1. Zur Darstellung einer Übersetzungsstufe eines Automatikgetriebes sind mehrere Elemente eines Planetengetriebes drehfest mit dem Gehäuse bzw. miteinander zu verbinden, was mittels Schaltelementen erfolgt, welche als Bremsen oder Kupplungen ausgebildet sind. Bei unterschiedlichen Übersetzungsstufen ist somit jeweils eine unterschiedliche Kombination von Schaltelementen zu schließen. Eine Gangschaltung, welche auch als Wechsel der Übersetzungsstufe oder nachfolgend auch nur als Schaltung bezeichnet wird vollzieht sich in einer bestimmten Schaltzeit durch ein Abschalten bzw. Öffnen und Zuschalten bzw. Schließen bestimmter Schaltelemente. Das Schließen der Schaltelemente erfolgt mittels derer Beaufschlagung durch einen hydraulischen Druck oder einer anderen Kraftwirkung. Im Falle eines zuzuschaltenden reibschlüssigen hydraulischen Schaltelements wird aus Gründen des Schaltkomforts die Übertragungsfähigkeit des Schaltelements durch einen mit einer bestimmten Funktion über der Zeit ansteigenden Druck entsprechend erhöht, bzw. im Betrieb der Schlupf des reibschlüssigen Schaltelements verringert. Man spricht bei einem reibschlüssigen Schaltelement dann von einem geschlossenen Zustand, wenn die Hälften des Schaltelements drehfest miteinander verbunden sind. Bei einem abzuschaltenden reibschlüssigen Schaltelement werden der Druck und damit die Übertragungsfähigkeit in einem entsprechenden zeitlichen Verlauf verringert. Im geöffneten Zustand eines reibschlüssigen Schaltelements sind die Schaltelementhälften voneinander getrennt, so dass außer einem Schleppmoment kein zum Vortrieb des Fahrzeugs ausreichendes Drehmoment übertragen werden kann.

Bei einem Automatikgetriebe mit hydraulischen reibschlüssigen Schaltelementen muss das zuzuschaltende und damit zu schließende Schaltelement zuerst für die Momentenübernahme vorbereitet, d. h. befüllt werden. Ebenso können auch vorbereitende Maßnahmen an dem abschaltenden Schaltelement getroffen werden, wie beispielsweise eine Absenkung des Druckes auf ein Niveau, bei welchem noch eine bestimmte schlupfbehaftete Übertragungsfähigkeit vorhanden ist. Üblicherweise wird der vorbereitende Befüllvorgang eines Schaltelements in eine Schnellfüllphase und eine Füllausgleichsphase aufgeteilt. Im Rahmen der Schnellfüllphase wird das Schaltelement mit Öl befüllt, wohingegen in der Füllausgleichsphase der Kolben mit geringem Druck angelegt wird, so dass zwar das Spiel in dem beispielsweise als Lamellenkupplung ausgebildeten Schaltelement aufgehoben, aber noch kein zum Antrieb oder zum Verspannen des Automatikgetriebes ausreichendes Drehmoment übertragbar ist. Durch die Vorbereitung der zu schaltenden Schaltelemente, sowie der Vorbereitung der abschaltenden Schaltelemente entstehen Verzögerungszeiten, in denen die Drehzahländerung zur nächsten Übersetzungsstufe nicht kontinuierlich verläuft, sondern auf der Synchrondrehzahl der vorherigen Schaltung stehen bleibt. Hieraus resultiert eine spürbare Stufe in der Drehzahländerung, wodurch auch der Schaltkomfort negativ beeinflusst wird.

Die immer steigenden Anforderungen an die Funktionalität der Automatgetriebe durch die Forderung nach mehr Spontaneität, die immer größer werdende Anzahl der zu schaltenden Übersetzungsstufen bzw. Gänge, die verbrauchsoptimierte Auslegung der Automatikgetriebe mit größeren Fahranteilen in den hohen Gängen und die mit der Gangzahl wachsende Anzahl der auszuführenden Rückschaltungen beim Abbremsen des Fahrzeugs bis zum Stillstand erfordern, dass die Gänge eines Automatikgetriebes immer schneller und häufiger hintereinander geschaltet werden sollen.

Beispielsweise kann es bei Bremsvorgängen abhängig von der abzubauenden Geschwindigkeitsdifferenz erforderlich sein, einen Wechsel der Übersetzungsstufen über mehrere Übersetzungsstufen hinweg vorzunehmen, wobei zu Beginn des Bremsvorganges ausgehend von einer Ausgangsübersetzungsstufe die Zielübersetzungsstufe noch nicht bekannt ist, so dass diese nicht direkt eingelegt werden kann. Zudem ist es selbst bei bekannter Zielübersetzungsstufe nicht bei allen Übersetzungsstufen möglich, direkt in diese zu schalten, das es erforderlich ist, bei einem Schaltvorgang nur ein Schaltelement zu öffnen und ein anderes Schaltelement zu schließen um Zugkraftunterbrechungen zu vermeiden.

In der DE 199 35 479 A1 wird ein Verfahren zum Betreiben eines Automatikgetriebes mit reibschlüssigen Schaltelementen angegeben, bei welchem in gleiche Schaltrichtung aufeinanderfolgende Schaltungen, d.h. entweder mehrere Hochschaltungen oder mehrere Rückschaltungen nacheinander, nicht als Mehrfachschaltung erfolgen, sondern ineinander verschachtelt werden. Unter einer Mehrfachschaltung ist in diesem Zusammenhang eine Vielzahl von aufeinanderfolgenden Schaltungen zu verstehen, wobei der nächste Schaltvorgang erst beginnt, nachdem die vorhergehende Schaltung abgeschlossen und die entsprechende Übersetzungsstufe eingelegt ist. Unter einer Verschachtelung von Schaltungen ist zu verstehen, dass während dem ersten Schaltvorgang der darauffolgende Schaltvorgang bereits vorbereitet wird. Unter der Vorbereitung einer Schaltung ist zu verstehen, dass die beim nächsten Schaltvorgang zuzuschaltenden Schaltelemente vorbefüllt werden und somit sofort nach dem Erreichen einer Synchrondrehzahl der ersten Schaltung geschlossen werden. Insbesondere ist die verschachtelte Schaltung der Fall eines Übersetzungsstufenwechsels, bei welchem mehr als ein Schaltelement geöffnet und damit mehr als ein Schaltelement geschlossen wird.

Durch die verschachtelte Schaltung ist es möglich, eine Schaltung über mehrere Übersetzungsstufen hinweg zu vorzunehmen, ohne dass wie bei der Mehrfachschaltung eine Zwischenstufe eingelegt wird. Die Schaltzeit von dem Auslegen der Ausgangsübersetzungsstufe bis zum eingelegten Zustand der letzten Übersetzungsstufe wird bei der verschachtelten Schaltung gegenüber einer Mehrfachschaltung deutlich verkürzt. Ebenso ist es möglich, eine Schaltung von einer Ausgangsübersetzungsstufe aus in eine erste Zielübersetzungsstufe zu starten und im Falle der Anforderung einer zweiten Zielübersetzungsstufe in die gleich Richtung durch die vorbereiteten Schaltelemente die Option zu haben, die zweite Zielübersetzungsstufe spontan mit einer kurzen Schaltzeit einzulegen. Darüber hinaus kann die verschachtelte Schaltung auch abgebrochen und die erste Zielübersetzungsstufe eingelegt werden, wenn dies erforderlich ist.

Es ist bekannt, dass mit dem Ziel der Wirkungsgradverbesserung von Automatikgetrieben ausgewählte reibschlüssige Schaltelemente durch formschlüssige Schaltelemente ersetzt werden. Vorteilhafterweise ist das Schleppmoment formschlüssiger Schaltelemente in deren geöffnetem Zustand deutlich geringer als das Schleppmoment eines offenen reibschlüssigen Schaltelements. Aus diesem Grunde werden bei einem bekannten Getriebe bestimmte reibschlüssige Schaltelemente durch formschlüssige Schaltelemente ersetzt. Die DE 10 2008 000 429 A1 zeigt ein solches Automatikgetriebe, welches vier reibschlüssige und zwei formschlüssige Schaltelemente umfasst. Es dürfen hierbei nur solche Schaltelemente formschlüssig ausgebildet sein, welche bei Hochschaltungen ausgerückt werden, d.h. ein Einlegen der formschlüssigen Schaltelemente erfolgt nur bei Rückschaltungen. Unter einem Ausrücken des formschlüssigen Schaltelements ist hierbei ein Vorgang zu verstehen, bei dem die Schaltelementhälften getrennt werden. Zu Beginn des Vorgangs ist das Schaltelement noch geschlossen und an dessen Ende das Schaltelement offen, wodurch keine Momentenübertragung mehr stattfinden kann. Analog hierzu ist unter dem Einlegen oder Einrücken eines formschlüssigen Schaltelements ein Vorgang zu verstehen, bei dem ein formschlüssiges Schaltelement ausgehend von einem geöffneten Zustand geschlossen wird.

Ist nun bei einer verschachtelten Schaltung ein zuzuschaltendes Schaltelement formschlüssig ausgebildet, beispielsweise als Klauenkupplung, welches bereits beim ersten Übersetzungswechsel zugeschaltet werden soll, so ist dieses nach dem bekannten Verfahren zu dem Zeitpunkt zu schließen, wann das ursprünglich reibschlüssige Schaltelement die Momentenübertragung übernimmt. Danach schließt ein weiteres zuzuschaltendes reibschlüssiges Schaltelement, welches bei der ersten Schaltung vorbereitet wurde.

Um ein formschlüssiges Schaltelement einrücken zu können, darf die Differenzdrehzahl der Schaltelementhälften einen bestimmten Maximalwert nicht überschreiten, da es ansonsten zu einer Beschädigung der Formelemente, wie beispielsweise Klauen oder Verzahnungen kommt. Ebenso ist es möglich, dass die Klauen der beiden Kupplungshälften nicht vollständig ineinander einrücken. Bei einer zu kleinen Differenzdrehzahl, bzw. bei gleicher Drehzahl der beiden Kupplungshälften können die Klauenverzahnungen beim Einrückvorgang eine Zahn-auf-Zahn-Stellung einnehmen, welche ein Einrücken der Verzahnungen ineinander unmöglich macht. Aus diesem Grunde ist es erforderlich mittels der Kenntnis von Eingangsdrehzahl und Abtriebsdrehzahl des Automatikgetriebes die Differenzdrehzahl von dessen Schaltelementhälften zu bestimmen und anschließend über Maßnahmen wie eine kurzzeitige Beeinflussung der Motordrehzahl oder das Abbremsen einer Schaltelementhälfte durch das Reibmoment eines reibschlüssigen Schaltelements in den gewünschten Bereich zu reduzieren. Als Eingangsdrehzahl wird hierbei nicht die Motordrehzahl, sondern die Drehzahl des Turbinenrades des hydrodynamischen Wandlers verwendet, da aufgrund eines eventuellen Schlupfes des hydrodynamischen Drehmomentwandlers Differenzen zwischen der Motordrehzahl und der Getriebeeingangswelle auftreten können.

Diese Bestimmung der Differenzdrehzahl am formschlüssigen Schaltelement ist jedoch nachteiligerweise bei einer bekannten Verschachtelung der Schaltungen nicht eindeutig möglich, da ein abzuschaltendes reibschlüssiges Schaltelement bereits angesichts der nachfolgenden Schaltung bereits in seiner Übertragungsfähigkeit zumindest in einen schlupfbehafteten Bereich abgesenkt wurde und ein zuzuschaltendes reibschlüssiges Schaltelement noch nicht vollständig geschlossen ist. Hierdurch kann es beim Versuch des Einrückens des formschlüssigen Schaltelements neben dessen bereits genannter Beschädigung zu Drehmomentstößen kommen, falls die Drehzahldifferenz zu groß ist. Hieraus resultieren Drehmomentstöße und damit ein schlechter Schaltkomfort.

Die der Erfindung zugrunde liegende Aufgabe ist es, ein Verfahren anzugeben, welches bei einer Schaltung, bei welcher mehr als ein Schaltelement zu öffnen, bzw. zu schließen ist, insbesondere einer verschachtelten Schaltung, das sichere und komfortable Einlegen eines formschlüssigen Schaltelements ermöglicht ohne die Schaltdauer zu verlängern. Insbesondere soll mit dem Verfahren eine sichere Ermittlung der Differenzdrehzahl der Schaltelementhälften des formschlüssigen Schaltelements gewährleistet sein.

Diese Aufgabe wird durch die Merkmale des Patentanspruches 1 gelöst.

Demnach wird ein Verfahren zum Betreiben eines Automatikgetriebes, welches mehrere reibschlüssige Schaltelemente und mindestens ein formschlüssiges Schaltelement umfasst angegeben. Zur Darstellung einer Übersetzungsstufe und damit eines Kraftflusses durch das Automatikgetriebe sind mindestens drei Schaltelemente geschlossen sind, wobei bei einem Schaltvorgang zwischen zwei bestimmten Übersetzungsstufen mindestens zwei Schaltelemente geöffnet werden und mindestens zwei weitere Schaltelemente, darunter mindestens ein formschlüssiges und mindestens ein reibschlüssiges Schaltelement, geschlossen werden. Erfindungsgemäß erfolgt im zeitlichen Ablauf des Schaltvorgangs das Schließen des formschlüssigen Schaltelements erst, nachdem alle reibschlüssigen Schaltelemente der mindesten zwei weiteren Schaltelemente geschlossen sind. Da zu einem komfortablen, verschleiß- und drehmomentstoßfreien Schließen des formschlüssigen Schaltelements eine Differenzdrehzahl von dessen Kupplungshälften unterhalb einem bestimmten zulässigen Betrag liegen muss, ist diese Differenzdrehzahl vor dem Schließen des formschlüssigen Schaltelements zu ermitteln und bei einer Überschreitung des Betrags zu reduzieren. Da die Differenzdrehzahl mittels der Kenntnis der eingangsdrehzahl und der ausgangsdrehzahl des Getriebes ermittelt wird, darf außer dem zuzuschaltenden formschlüssigen Schaltelement kein weiteres Schaltelement, welches zur Darstellung der gewünschten Übersetzungsstufe benötigt wird, eine Differenzdrehzahl aufweisen.

Bevorzugt handelt es sich bei dem Schaltvorgang um eine Rückschaltung.

In einer besonders vorteilhaften Ausgestaltung des Verfahrens erfolgt der Wechsel der bestimmten Übersetzungsstufen in zwei aufeinanderfolgenden Rückschaltungen, welche derart verschachtelt ausführbar sind, dass bei der ersten Rückschaltung mindestens ein für die nachfolgende zweite Rückschaltung benötigtes Schaltelement während der laufenden ersten Rückschaltung derart vorbereitet wird, dass bei Erreichen eines Synchronpunkts der laufenden ersten Rückschaltung die sofortige Durchführung der nachfolgenden zweiten Rückschaltung möglich ist. Das Automatikgetriebe weist hierbei mindestens sechs Schaltelemente auf, von welchen zur Moment- bzw. Kraftübertragung in einem Vorwärtsgang bzw. in einem Rückwärtsgang jeweils maximal drei Schaltelemente geschlossen sind, wobei zwei aufeinanderfolgende Rückschaltungen durch Ansteuerung von mindestens fünf Schaltelementen derart ausführbar sind, dass sowohl bei der ersten als auch der zweiten Rückschaltung jeweils ein Schaltelement zu öffnen und jeweils ein Schaltelement zu schließen ist, um von der jeweiligen Ausgangsübersetzungsstufe zur jeweiligen Zielübersetzungsstufe zu schalten. Hierbei sind bei der Verschachtelung der ersten und der zweiten Rückschaltung ein erstes und ein zweites Schaltelement zu öffnen und ein drittes und ein viertes Schaltelement zu schließen, um von der Ausgangsübersetzungsstufe der ersten Rückschaltung zur Zielübersetzungsstufe der zweiten Rückschaltung zu gelangen. Das dritte Schaltelement ist hierbei formschlüssig ausgebildet und wäre bereits zur Darstellung der Zielübersetzungsstufe der ersten Rückschaltung zu schließen. Das vierte Schaltelement ist reibschlüssig ausgebildet und wird während der ersten Rückschaltung zur Zuschaltung bei der zweiten Rückschaltung vorbereitet, wobei beim Einlegen der Zielübersetzungsstufe der zweiten Rückschaltung zuerst das vorbereitete reibschlüssige vierte Schaltelement geschlossen wird und anschließend das formschlüssige dritte Schaltelement, nachdem die Differenzdrehzahl von dessen Schaltelementhälften bestimmt und falls erforderlich unter einen bestimmten zulässigen Wert geführt wurde, zugeschaltet wird.

In Weiterführung der Ausgestaltung wird die Drehzahldifferenz unter den bestimmten Wert geführt, indem ein positiver Motoreingriff erfolgt. Unter einem positiven Motoreingriff ist hierbei die Anhebung der Motordrehzahl des Antriebsmotors des Fahrzeuges zu verstehen.

In diesem Zusammenhang ist es möglich, dass zwischen einem Zeitpunkt, an dem das dritte Schaltelement als letztes reibschlüssiges Schaltelement geschlossen ist und einem Zeitpunkt, zu dem der Schließvorgang des formschlüssigen Schaltelements beginnt, ein bestimmtes Zeitintervall liegt, welches so groß gewählt ist, dass während dessen Dauer eine Drehzahldifferenz zwischen den Schaltelementhälften des formschlüssigen Schaltelements bestimmt und die Drehzahldifferenz unter einen bestimmten Wert geführt werden kann.

Bevorzugt liegen zwischen der ersten bestimmten Übersetzungsstufe und der zweiten bestimmten Übersetzungsstufe mindestens zwei benachbarte Übersetzungsstufen.

Es ist besonders vorteilhaft, dass bei einem Wechsel zwischen zwei aufeinanderfolgenden Übersetzungsstufen nur ein Schaltelement geöffnet und ein anderes Schaltelement geschlossen wird. Hierdurch ist sichergestellt, dass es während dem Schaltvorgang nicht zu einer Zugkraftunterbrechung kommt.

Mehrere Ausführungsbeispiele der Erfindung sind in den Zeichnungen dargestellt und werden im Folgenden näher beschrieben.

Es zeigen:
- Fig. 1a: eine schematische Darstellung eines Automatikgetriebes mit Radsätzen und Schaltelementen;
- Fig. 1b: die für die Darstellung der unterschiedlichen Übersetzungsstufen zu schließenden Schaltelemente in tabellarischer Form;
- Fig. 2a: den zeitlichen Verlauf der Schaltelementdrücke bei einer verschachtelten Schaltung mit reibschlüssigen Schaltelementen nach dem Stand der Technik;
- Fig. 2b: den zeitlichen Verlauf der Schaltelementdrücke bei einer verschachtelten Schaltung mit reibschlüssigen Schaltelementen und einem formschlüssigen Schaltelement nach dem Stand der Technik und
- Fig. 2c: den zeitlichen Verlauf der Schaltelementdrücke bei einer verschachtelten Schaltung mit reibschlüssigen Schaltelementen und einem formschlüssigen Schaltelement nach dem erfindungsgemäßen Verfahren.

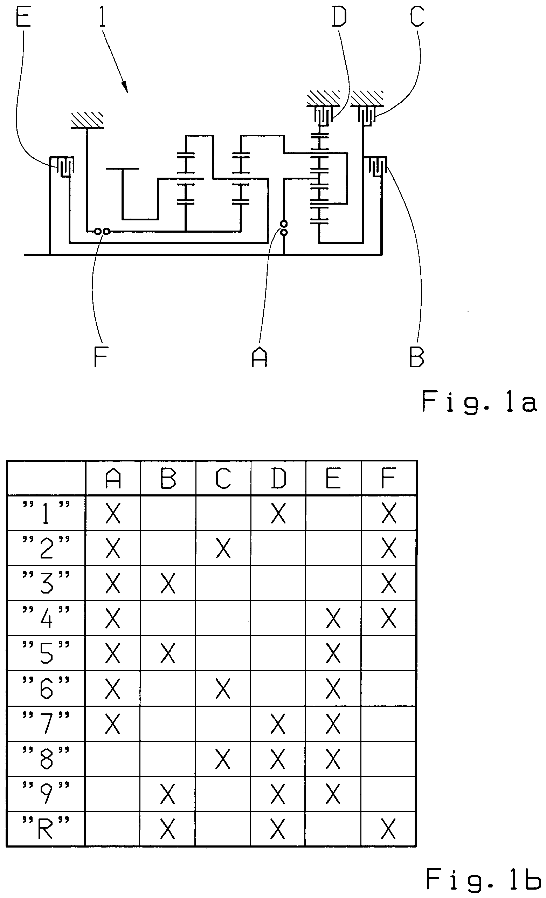

In Fig. 1a ist beispielhaft das Radsatzschema eines Automatikgetriebes 1 mit sechs Schaltelementen A bis F schematisch dargestellt, wobei die Schaltelemente A und F formschlüssig und die Schaltelemente B, C, D und E reibschlüssig wirksam sind. Die reibschlüssigen Schaltelemente werden auch als Reibkupplungen und die formschlüssigen Schaltelemente auch als Klauenkupplungen oder Klauenschaltelemente bezeichnet. Das formschlüssige Schaltelement A ist hierbei als Kupplung, d.h. eine schaltbare Verbindung zwischen zwei drehbaren Teilen ausgebildet. Das formschlüssige Schaltelement F verbindet im geschlossenen Zustand eine Welle drehfest mit dem Gehäuse und ist damit als Bremse ausgebildet.

Wie aus der Tabelle in Fig. 1b hervorgeht, werden neun mögliche, auch als Gänge bezeichnete Übersetzungsstufen "1" bis "9", für die Vorwärtsfahrt und eine Übersetzungsstufe "R" als Rückwärtsgang von jeweils drei geschlossenen Schaltelementen dargestellt. In den Übersetzungsstufen "1" bis "4" sind dabei jeweils zwei Klauenschaltelemente A und F geschlossen, so dass über das Zuschalten eines der vier reibschlüssigen Schaltelemente B, C, D, E ein Kraftschluss in den Gängen "1" bis "4" erreicht wird. Um von einer Übersetzungsstufe zur nächsten zu gelangen, ist jeweils ein Schaltelement zu öffnen und ein anderes Schaltelement zu schließen. So müssen beispielsweise zur Darstellung des vierten Ganges, bzw. der Übersetzungsstufe "4" die Schaltelemente A, E und F geschlossen sein. Um einen Wechsel von der Übersetzungsstufe "4" zur Übersetzungsstufe "3" zu tätigen, ist das Schaltelement E zu öffnen und das Schaltelement B zu schließen. Die Schaltelemente A und F bleiben dabei geschlossen. Daneben gibt es auch Übersetzungsstufen, die über andere Übersetzungsstufen hinweg durch Öffnen bzw. Schließen nur eines Schaltelements ineinander überführt werden können, wie beispielsweise die Wechsel der Übersetzungsstufen "7" und "4" oder "7" und "5".

Die formschlüssigen Schaltelemente A oder F werden nur geschlossen, wenn von einer höheren zu einer niedrigeren Übersetzungsstufe gewechselt wird, wie beispielsweise von der Übersetzungsstufe "5" zur Übersetzungsstufe "4". Bei einem Wechsel von einer niedrigeren zu einer höheren Übersetzungsstufe werden die formschlüssigen Schaltelemente A oder F nur geöffnet, wie beispielsweise von der Übersetzungsstufe "4" zur Übersetzungsstufe "5" oder von der Übersetzungsstufe "7" zur Übersetzungsstufe "8".

Müssen aber nun bei einer Schaltung eine oder mehrere Übersetzungsstufen übersprungen werden, wie dies beispielsweise bei einem Bremsvorgang mit deutlicher Geschwindigkeitsabnahme erforderlich sein kann, sind zwischen Ausgangsübersetzungsstufe und Zielübersetzungsstufe oftmals mehr als ein Schaltelement, im vorliegenden Beispiel zwei Schaltelemente zu öffnen, bzw. zu schließen. Dies ist der Fall bei den Schaltungen von Übersetzungsstufe "9" bzw. "8" nach jeweils "1" bis "6", von Übersetzungsstufe "7" nach "2" und "3", von Übersetzungsstufe "6" nach "3" und "1", sowie von Übersetzungsstufe "5" nach "2" und "1". Bei Rückschaltungen von der Ausgangsübersetzungsstufe "5", "6" oder "7" zu den Übersetzungsstufen "4" bis "1" ist jeweils das formschlüssige Schaltelement F zu schließen.

Solche Schaltungen müssen in zwei Übersetzungsstufenwechsel aufgeteilt werden, bei welchen jeweils nur ein Schaltelement geschlossen bzw. geöffnet werden muss, da es ansonsten zu einer Zugkraftunterbrechung kommt. Dies wird auch als Mehrfachschaltung bezeichnet.

Wenn bei einem Bremsvorgang eine Rückschaltung von einer Ausgangsübersetzungsstufe zu einer ersten Zielübersetzungsstufe gestartet wird, und während der vorzubereitenden Zuschaltung des einen zu schließenden Schaltelements, beispielsweise aufgrund des Geschwindigkeitsgradienten des Fahrzeugs, erkannt wird, dass eine noch tiefere Übersetzungsstufe als zweite Zielübersetzungsstufe einzulegen ist, so wird eine verschachtelte Schaltung ausgeführt, d.h. das Schaltelement, welches zur Darstellung der zweiten Zielübersetzungsstufe zu schließen ist, wird für seine Zuschaltung vorbereitet, d.h. in einer Schnellfüllphase vorbefüllt und in die Füllausgleichsphase gebracht. Hierdurch wird wie oben beschrieben eine deutlich kürzere Schaltzeit erreicht im Vergleich zur Mehrfachschaltung, welche in einem solchen Falle auch durchführbar wäre.

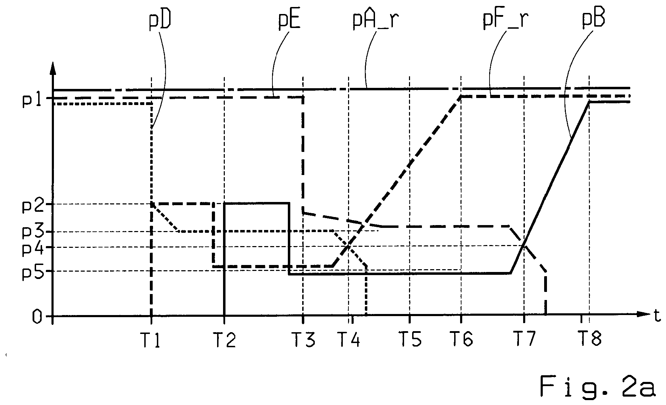

In den Fig. 2a werden beispielhaft die Verläufe von Drücken der reibschlüssigen Schaltelemente A_r, B, D, E und F_r über der Zeit für eine verschachtelte Rückschaltung nach dem Stand der Technik von einer Übersetzungsstufe "7" ausgehend gezeigt. Im Stand der Technik ist dieses Verfahren nur für reibschlüssige Schaltelemente offenbart. Die den Schaltelementen zugeordneten Druckverläufe als Funktion der Zeit werden mit pA_r, pB, pD, pE und pF_r bezeichnet.

Zu einem Zeitpunkt T0 ist die Übersetzungsstufe "7" eingelegt. Die Drücke der reibschlüssigen Schaltelemente A, D und E befinden sich auf einem Schließdruckniveau p1, bei welchem das maximale Moment schlupffrei übertragbar ist.

Das Schließdruckniveau sowie alle nachfolgend genannten Druckniveaus sind in den Beispielen für alle Schaltelemente gleich, was auch theoretisch möglich ist. In der Praxis können sich diese jedoch geringfügig unterscheiden, da die von dem jeweiligen Kupplungsdruck beaufschlagbaren Flächen der Kupplungskolben konstruktiv bedingt unterschiedlich sein können. Die auf dem jeweils gleichen Druckniveau befindlichen Schaltelementdrücke in den Diagrammen in Fig. 2a - c sind in Richtung der p-Achse aus Gründen einer übersichtlichen Darstellung voneinander beabstandet, insbesondere beim Schließdruckniveau.

Zum Zeitpunkt T1 wird ein Schaltbefehl ausgegeben, bei welchem von der Ausgangsübersetzungsstufe "7" in die Zielübersetzungsstufe "4" geschaltet werden soll. Hierzu ist, wie aus Fig. 1b zu entnehmen, das Schaltelement D zu öffnen und das Schaltelement F_r zu schließen. Der Druck pD und damit die Übertragungsfähigkeit des Schaltelements D wird zum Zeitpunkt T1 sprungartig mit einem anschließenden kurzen linearen Druckabfall bis auf ein Zwischendruckniveau p3 abgesenkt. Die Übertragungsfähigkeit auf einem Zwischendruckniveau ist ausreichend für eine schlupfbehaftete Momentenübertragung und ermöglicht eine Überschneidungsschaltung ohne Zugkraftunterbrechung. Das für die Darstellung der Übersetzungsstufe "4" zuzuschaltende Schaltelement F_r wird zum Zeitpunkt T1 für seine Zuschaltung vorbereitet, wobei der Druck pF_r auf ein Schnellfülldruckniveau p2 angehoben und dort bis zu einem Zeitpunkt T2 gehalten wird. Auf die so genannte Schnellfüllphase folgt ab dem Zeitpunkt T2 die so genannte Füllausgleichsphase, zu deren Beginn der Druck pF_r auf das Füllausgleichsdruckniveau p5 abgesenkt und dort konstant gehalten wird. Die Drücke pE und pA_r bleiben auf dem Schließdruckniveau p1, wodurch die Schaltelemente A und E geschlossen bleiben. Bei der ursprünglich beabsichtigten Schaltung von der Übersetzungsstufe "7" in die Übersetzungsstufe "4" würde das Schaltelement E während des gesamten Schaltvorganges geschlossen bleiben während gemäß des Ablaufs einer Überschneidungsschaltung das Schaltelement F_r in seiner Übertragungsfähigkeit angehoben wird.

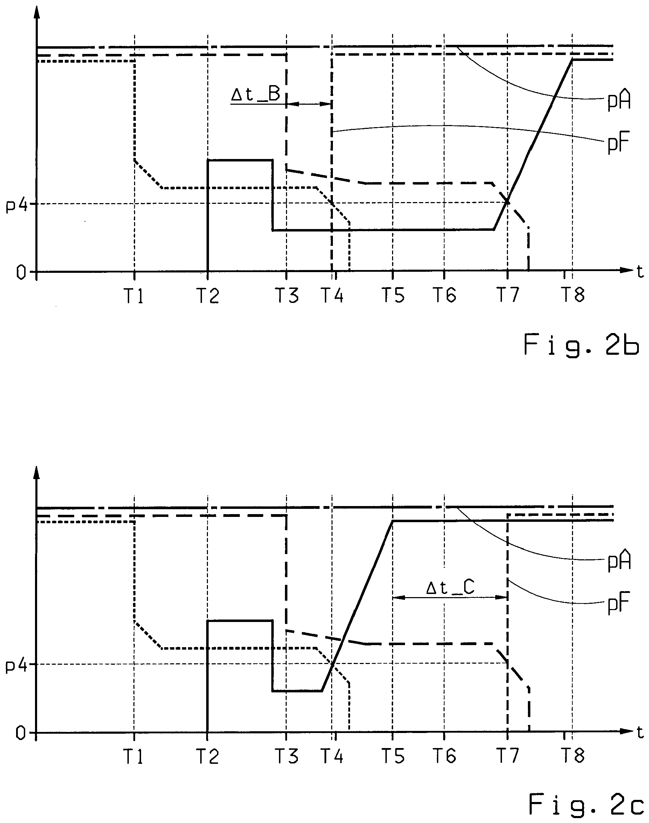

Da das Schaltelement A_r sowohl bei der Übersetzungsstufe "7" als auch bei den Übersetzungsstufen "4" und "3" geschlossen sein muss, bleibt der Schaltelementdruck pA_r während der gesamten Schaltdauer auf dem Schließdruckniveau p1. Deshalb ist es in diesem Beispiel ohne Bedeutung, ob dieses als formschlüssiges oder eine reibschlüssiges Schaltelement ausgebildet ist. Im Unterschied hierzu ist das Schaltelement F_r in Fig. 2a als reibschlüssiges Schaltelement und in Fig. 2b und 2c als formschlüssiges Schaltelement F ausgebildet. Zwischen den Zeitpunkten T1 und T2 wird aufgrund einer beispielsweise aus dem Geschwindigkeitsgradienten erkennbaren neuen Anforderung einer weiteren Rückschaltung, ein Schaltbefehl zum Einlegen der Übersetzungsstufe "3" anstelle der Übersetzungsstufe "4" ausgegeben. Zur Darstellung der Übersetzungsstufe "3" müssen die Schaltelemente A, B und Fr geschlossen sein, wie in der Tabelle in Fig. 1b gezeigt ist.

Zu dem Zeitpunkt T2, kurz nach Abschluss der Schnellfüllphase von Schaltelement Fr, wird der zur Vorbereitung der Schaltung von der Übersetzungsstufe "4" zur Übersetzungsstufe "3" der Druck pB sprungartig auf das Schnellfülldruckniveau p2 angehoben, womit die Verschachtelung der Schaltung beginnt. Der Druck pB bleibt bis kurz vor einem Zeitpunkt T3 auf dem Schnellfülldruckniveau p2. Da das Schaltelement E nicht zur Darstellung der neuen Zielübersetzungsstufe "3" geschlossen sein muss, wird der Druck pE zum Zeitpunkt T3 sprungartig auf das Zwischendruckniveau p3 abgesenkt. Der wie bei einer Schaltung zur Übersetzungsstufe "4" nach dem Zeitpunkt T3 linear ansteigende Druck pFr überschreitet zu einem Zeitpunkt T4 ein Übernahmedruckniveau p4 auf dem sich der Druck pD befindet, wonach die Übertragungsfähigkeit des Schaltelements Fr weiter angehoben und der Druck pD auf Null abgesenkt wird.

Unter einem Übernahmedruckniveau ist die Druckhöhe in einem hydraulischen reibschlüssigen Schaltelement zu verstehen, bei welcher die Übertragungsfähigkeit eines reibschlüssigen Schaltelements soweit angehoben ist, dass ein Moment übertragbar ist, wobei das Schaltelement zu diesem Zeitpunkt noch nicht geschlossen ist und das Moment unter Schlupf überträgt, d.h. zwischen den beiden Schaltelementhälften besteht eine Drehzahldifferenz. Bei einer Überschneidungsschaltung übernimmt das zuzuschaltende Schaltelement das Moment von dem in seiner Übertragungsfähigkeit reduzierten Schaltelement bei Erreichen des Übernahmedruckniveaus, so dass keine Zugkraftunterbrechung auftritt.

Das Schaltelement D ist damit zum Zeitpunkt T4 vollständig geöffnet. Dadurch, dass sich ab dem Zeitpunkt T4 die Drücke pE und pFr jeweils auf einem Druckniveau befinden, bei welchem zumindest eine schlupfbehaftete Momentenübertragung möglich ist und das Schaltelement Ar geschlossen ist, wird eine Zugkraftunterbrechung vermieden.

Der Druck pFr erreicht nach Ende seines rampenförmigen Anstiegs zu einem Zeitpunkt T6 das Schließdruckniveau p1, wodurch das Schaltelement Fr vollständig geschlossen ist. Um die Übersetzungsstufe "3" komplett einzulegen wird zwischen den Zeitpunkten T6 und T7 der Druck pB rampenförmig angehoben. Zu einem Zeitpunkt T7 erreicht dieser das Übernahmedruckniveau p4 und übersteigt anschließend den Druck pE, wobei die Übertragungsfähigkeit des Schaltelements B weiter gesteigert wird.

Da zu dem Zeitpunkt T7 die Schaltelemente Ar und Fr geschlossen sind und das Schaltelement B schlupfbehaftet ein Moment übertragen kann, wird der Druck pE kurz nach dem Zeitpunkt T7 auf null abgesenkt und damit das Schaltelement E vollständig geöffnet. Bei drei momentenübertragenden Schaltelementen würde eine weitere Druckbeaufschlagung des Schaltelements E auf dem Zwischendruckniveau p3 zum Blockieren des Automatikgetriebes führen. Zu einem Zeitpunkt T8 wird das Schaltelement B vollständig geschlossen, womit die Übersetzungsstufe "3" eingelegt ist.

Fig. 2b zeigt die zeitlichen Verläufe der Kupplungsdrücke bei einer verschachtelten Schaltung, bei welcher im Unterschied zur unter Fig. 2a beschriebenen verschachtelten Schaltung nach dem Stand der Technik das Schaltelement F formschlüssig und nicht reibschlüssig ist. Das Schaltelement A ist im Beispiel von Fig. 2b nun ebenfalls formschlüssig, was allerdings keine Auswirkungen auf den beschriebenen Schaltvorgang hat, da es während der gesamten Schaltdauer geschlossen bleibt.

Wie im Diagramm von Fig. 1a ist zum Zeitpunkt T0 die Übersetzungsstufe "7" eingelegt. Zum Zeitpunkt T1 wird ein Schaltbefehl zum Wechsel in die Übersetzungsstufe "4" erteilt, so dass der Druck pD auf das Zwischendruckniveau p3 reduziert wird. Da im Unterschied zu Fig. 1a das zuzuschaltende Schaltelement F formschlüssig ist, muss dieses im Unterschied zur Schaltung in Fig. 1a nicht vorbereitet werden im Sinne einer beschriebenen hydraulischen Vorbefüllung wie bei einem reibschlüssigen Schaltelement . Der Grund hierfür ist, dass bei einem formschlüssigen Schaltelement die Übertragungsfähigkeit nicht beliebig gesteigert werden kann, sondern dieses nur einen geöffneten oder einen geschlossenen Zustand einnehmen kann. In diesem Falle ist das formschlüssige Schaltelement bei einer Beaufschlagung mit einem bestimmten Druck pF geschlossen und im drucklosen Zustand, d.h. bei einem Druck Null geöffnet. Grundsätzlich kann je nach konstruktiver Ausführung des formschlüssigen Schaltelements dieses auch bei einem Druck von größer Null noch geöffnet sein, solange dieser Druck unterhalb eines zum Schließen des Schaltelements erforderlichen Mindestdrucks liegt.

Die Erhöhung des Schaltdrucks für ein formschlüssiges Schaltelement vollzieht sich im Prinzip sprungartig. Aufgrund der nicht erforderlichen hydraulischen Vorbereitung und des steilen, praktisch senkrechten Druckanstiegs muss das formschlüssige Schaltelement F erst zu dem Zeitpunkt zugeschaltet werden, wenn es erforderlich ist, das Moment des abzuschaltenden Schaltelements D, dessen Druck pD sich noch auf einem Zwischendruckniveau p3 befindet, zu übernehmen. Dies geschieht zu dem Zeitpunkt T4, wenn der Druck pD auf Null abgesenkt wird. Zum Zeitpunkt T4 sind die formschlüssigen Schaltelemente A und F geschlossen und das reibschlüssige Schaltelement E überträgt schlupfbehaftet ein Moment, so dass keine Zugkraftunterbrechung erfolgt.

Kurz vor dem Zeitpunkt T7 ist die Füllausgleichsphase des Schaltelements B abgeschlossen. Das zur Darstellung der Zielübersetzungsstufe "3" erforderliche Schaltelement B wird nun durch eine rampenförmige Anhebung des Druckes pB ausgehend von dessen Füllausgleichsdruckniveau p5 in seiner Übertragungsfähigkeit angehoben. Zum Zeitpunkt T7 übernimmt dieses wie in der unter Fig. 1a gezeigten verschachtelten Schaltung das Moment des abschaltenden Schaltelements E und erreicht zum Zeitpunkt T8 das Schaltdruckniveau p_max, womit die Schaltelemente A, B und F geschlossen, bzw. die Zielübersetzungsstufe "3" eingelegt ist.

Auch wenn ein formschlüssiges Schaltelement keiner hydraulischen Vorbefüllung bedarf, so ist zu dessen Zuschaltung eine andere Art der Vorbereitung erforderlich. Ein einlegen oder zuschalten eines formschlüssigen Schaltelements nur möglich, wenn sich die Drehzahldifferenz von dessen Schaltelementhälften in einem bestimmten Bereich befindet, wie bereits oben beschrieben wurde.

In einem vorliegenden Automatikgetriebe werden die Turbinendrehzahl, d.h. die Eingangsdrehzahl des Getriebes, und die Abtriebsdrehzahl am Getriebeausgang gemessen. Eine Bestimmung der Differenzdrehzahl der Schaltelementhälften eines formschlüssigen Schaltelements ist mit diesen beiden Drehzahlen nur möglich, wenn das formschlüssige Schaltelement das einzige offene Schaltelement der zur Herstellung des Kraftschlusses bei der jeweiligen Übersetzungsstufe zu schließenden Schaltelemente ist. Die übrigen Schaltelemente, die zur Darstellung der Übersetzungsstufe erforderlich sind, müssen vollständig geschlossen sein, da bei deren schlupfbehafteter Übertragung mehrere Drehzahldifferenzen im Getriebe bestehen und deshalb nicht eindeutig die des formschlüssigen Schaltelements berechnet werden kann.

Sind nun die zur Darstellung einer Übersetzungsstufe zu schließenden Schaltelemente alle bis auf das formschlüssige Schaltelement geschlossen, wird in einer bestimmten Zeitdauer die Differenzdrehzahl berechnet. Liegt diese in einem zulässigen Bereich unterhalb einer bestimmten Obergrenze, kann das formschlüssige Schaltelement geschlossen und damit zugeschaltet werden. Liegt die Differenzdrehzahl außerhalb dieses Bereiches, muss diese beispielsweise durch einen Motoreingriff und damit einer Änderung der Turbinendrehzahl in den zulässigen Bereich geführt werden. Dann erst kann das formschlüssige Schaltelement eingerückt werden.

Im vorliegenden Beispiel in Fig. 2b müssten zwei von drei Schaltelementen vollständig geschlossen sein, bevor dass formschlüssige Schaltelement zugeschaltet werden kann. Vor dem Zuschalten des Schaltelements F ist jedoch nach der Reduzierung des Drucks pE zum Zeitpunkt T3 lediglich das Schaltelement A geschlossen. Die Schaltelemente D und E befinden übertragen in dem Zeitbereich Δt_B zwischen den Zeitpunkten T3 und T4 zwar ein Moment, arbeiten aber auf dem Zwischendruckniveau p3 schlupfbehaftet, d.h. weisen selbst Drehzahldifferenzen auf. Somit kann die Differenzdrehzahl des Schaltelements F nicht ermittelt werden. Ein Einrücken ohne deren Kenntnis kann die oben beschriebenen nachteiligen Wirkungen zur Folge haben, so dass von einer Zuschaltung abgesehen werden muss.

Somit ist ein einfaches Ersetzen des reibschlüssigen Schaltelements Fr durch das formschlüssige Schaltelement F bei Anwendung des Verfahrens einer verschachtelten Schaltung nach dem Stand der Technik mit großen Nachteilen behaftet und praktisch nicht möglich.

Das Diagramm in Fig. 2c zeigt ein erfindungsgemäßes Verfahren einer verschachtelten Schaltung mit einem zuzuschaltenden formschlüssigen Schaltelement. Wie in Fig. 2b kann ausgehend von der Übersetzungsstufe "7" zur Schaltung in die Übersetzungsstufe "4" eine hydraulische Vorbereitung des formschlüssigen Schaltelements F zum Zeitpunkt T1 im Gegensatz zum reibschlüssigen Schaltelement Fr in Fig. 2a unterbleiben. Zur Vorbereitung einer Schaltung in die Zielübersetzungsstufe "3" wird wie in den Diagrammen von Fig. 2a und 2b zum Zeitpunkt T2 das Schaltelement B vorbereitet, indem der Druck pB sprungartig auf das Schnellfülldruckniveau p2 angehoben wird. Die Verläufe der Schaltelementdrücke pD und pE sind identisch wie in Fig. 2a und 2b, ebenso das Absenken des Schaltelementdrucks pB nach dessen Schnellfüllphase etwa zum Zeitpunkt T4. Steht die Übersetzungsstufe "3" als neue Zielübersetzungsstufe fest, was bereits ab dem Zeitpunkt T2 möglich ist, wird der Schaltelementdruck pB zwischen den Zeitpunkten T3 und T4 rampenförmig angehoben. Kurz vor dem Zeitpunkt T4, erreicht dieser das Übernahmedruckniveau p4 und übersteigt den Schaltelementdruck pD, welcher zum Zeitpunkt T4 auf Null abgesenkt wird und übernimmt dessen Anteil an der Kraftübertragung. Zum Zeitpunkt T5 erreicht der Schaltelementdruck pB das Schließdruckniveau p_max, womit nun neben dem Schaltelement A auch das Schaltelement B geschlossen ist. Ab dem Zeitpunkt T5 ist nun einer Ermittlung der Differenzdrehzahl am offenen formschlüssigen Schaltelement F möglich. Der Schaltelementdruck pE verbleibt auf dem Zwischendruckniveau, um eine Zugkraftunterbrechung zu vermeiden. Innerhalb eines Zeitintervalls Δt_C ist nach einer Ermittlung einer Differenzdrehzahl deren Anpassung an einen zulässigen Wert mittels eines positiven Motoreingriffs, d.h. der Anhebung der Motordrehzahl des Antriebsmotors des Fahrzeuges, möglich. Die Dauer des Zeitintervalls Δt_C und damit die Schaltzeit wird dadurch bestimmt, wie schnell die Drehzahldifferenz in einen zulässigen Bereich geführt werden kann.

Im vorliegenden Beispiel ist diese Anpassung zum Zeitpunkt T7 abgeschlossen. Der Schaltelementdruck pE wird auf Null abgesenkt und erreicht zum Zeitpunkt T7 das Übernahmedruckniveau p4, so dass das formschlüssige Schaltelement F zugeschaltet werden kann. Da der Schaltelementdruck pE auf Null abgesenkt wird, wird eine Verspannung des Automatikgetriebes vermieden. Die gesamte Schaltzeit für die verschachtelte Schaltung musste durch die Verkürzung der Füllausgleichsphase beim Schaltelement B bei dem erfindungsgemäßen Verfahren nicht verlängert werden. Dadurch, dass das letzte zuzuschaltende Schaltelement formschlüssig ist und sprungartig eingerückt werden kann, kann die Gesamtschaltzeit gegenüber reibschlüssigen Schaltelementen theoretisch sogar verkürzt werden.

### Bezugszeichen

- 1: Automatikgetriebe
- A: Schaltelement, formschlüssig
- A_r: Schaltelement, reibschlüssig
- B: Schaltelement, reibschlüssig
- C: Schaltelement, reibschlüssig
- D: Schaltelement, reibschlüssig
- E: Schaltelement, reibschlüssig
- F: Schaltelement, formschlüssig
- F_r: Schaltelement, reibschlüssig
- pA: Schaltelementdruck des Schaltelements A
- pA_r: Schaltelementdruck des Schaltelements A_r
- pB: Schaltelementdruck des Schaltelements B
- pC: Schaltelementdruck des Schaltelements C
- pD: Schaltelementdruck des Schaltelements D
- pE: Schaltelementdruck des Schaltelements E
- pF: Schaltelementdruck des Schaltelements F
- pF_r: Schaltelementdruck des Schaltelements F_r
- p1: Schließdruckniveau
- p2: Schnellfülldruckniveau
- p3: Zwischendruckniveau
- p4: Übernahmedruckniveau
- p5: Füllausgleichsdruckniveau
- T1: Zeitpunkt
- T2: Zeitpunkt
- T3: Zeitpunkt
- T4: Zeitpunkt
- T5: Zeitpunkt
- T6: Zeitpunkt
- T7: Zeitpunkt
- T8: Zeitpunkt
- At_B: Zeitintervall
- Δt_C: Zeitintervall zur Vorbereitung der Klauenzuschaltung

## Patentansprüche

1. Verfahren zum Betreiben eines Automatikgetriebes (1), umfassend mehrere reibschlüssige Schaltelemente (B, C, D, E) und mindestens ein formschlüssiges Schaltelement (A, F), wobei zur Darstellung einer Übersetzungsstufe und damit eines Kraftflusses durch das Automatikgetriebe (1) mindestens drei Schaltelemente geschlossen sind, wobei bei einem Schaltvorgang zwischen zwei bestimmten Übersetzungsstufen ("7" und "3") mindestens zwei Schaltelemente (D, E) geöffnet werden und mindestens zwei weitere Schaltelemente (B, F), darunter mindestens ein formschlüssiges (F) und mindestens ein reibschlüssiges Schaltelement (B), geschlossen werden, **dadurch gekennzeichnet, dass** im zeitlichen Ablauf des Schaltvorgangs das Schließen des formschlüssigen Schaltelements (F) erst erfolgt, nachdem alle reibschlüssigen Schaltelemente (B) der mindestens zwei weiteren Schaltelemente (B, F) geschlossen sind.

2. Verfahren nach Anspruch 1, **dadurch gekennzeichnet, dass** es sich bei dem Schaltvorgang um eine Rückschaltung handelt.

3. Verfahren nach Anspruch 2, **dadurch gekennzeichnet, dass** der Wechsel der bestimmten Übersetzungsstufen ("7" nach "3") in zwei aufeinanderfolgenden Rückschaltungen ("7" nach "4" und "4" nach "3") erfolgt, welche derart verschachtelt ausführbar sind, dass bei der ersten Rückschaltung ("7" nach "4") mindestens ein für die nachfolgende zweite Rückschaltung ("4" nach "3") benötigtes Schaltelement (B) während der laufenden ersten Rückschaltung derart vorbereitet wird, dass bei Erreichen eines Synchronpunkts der laufenden ersten Rückschaltung die sofortige Durchführung der nachfolgenden zweiten Rückschaltung möglich ist, wobei der Wechsel der Übersetzungsstufen in einem Automatikgetriebe mit mindestens sechs Schaltelementen durchgeführt wird, von welchen zur Moment- bzw. Kraftübertragung in einem Vorwärtsgang bzw. in einem Rückwärtsgang jeweils maximal drei Schaltelemente geschlossen sind, zwei aufeinanderfolgende Rückschaltungen durch Ansteuerung von mindestens fünf Schaltelementen derart ausführbar sind, dass sowohl bei der ersten als auch der zweiten Rückschaltung jeweils ein Schaltelement zu öffnen und jeweils ein Schaltelement zu schließen ist, um von der jeweiligen Ausgangsübersetzungsstufe zur jeweiligen Zielübersetzungsstufe zu schalten, so dass bei der Verschachtelung der ersten und der zweiten Rückschaltung ein erstes (D) und ein zweites Schaltelement (E) zu öffnen und ein drittes (F) und ein viertes (B) Schaltelement zu schließen sind, um von der Ausgangsübersetzungsstufe der ersten Rückschaltung ("7") zur Zielübersetzungsstufe der zweiten Rückschaltung ("3") zu gelangen, wobei das dritte Schaltelement (F) formschlüssig ausgebildet ist und bereits zur Darstellung der Zielübersetzungsstufe der ersten Rückschaltung ("4") zu schließen wäre und wobei das vierte Schaltelement (B) reibschlüssig ausgebildet ist und während der ersten Rückschaltung zur Zuschaltung bei der zweiten Rückschaltung vorbereitet wird, wobei beim Einlegen der Zielübersetzungsstufe der zweiten Rückschaltung ("3") zuerst das vorbereitete reibschlüssige vierte Schaltelement (B) geschlossen wird und anschließend das formschlüssige dritte Schaltelement (F), nachdem die Differenzdrehzahl von dessen Schaltelementhälften bestimmt und falls die Differenzdrehzahl oberhalb einer bestimmten Obergrenze liegt, unter einen bestimmten zulässigen Wert geführt wurde, zugeschaltet wird.

4. Verfahren nach Anspruch 3, **dadurch gekennzeichnet, dass** die Drehzahldifferenz unter den bestimmten Wert geführt wird, indem ein positiver Motoreingriff erfolgt.

5. Verfahren nach Anspruch 3 oder 4, **dadurch gekennzeichnet, dass** zwischen einem Zeitpunkt (T5), an dem das vierte Schaltelement (B) als letztes reibschlüssige Schaltelement geschlossen ist und einem Zeitpunkt (T7), zu dem der Schließvorgang des formschlüssigen Schaltelements beginnt, ein bestimmtes Zeitintervall (Δt_C) liegt, welches so groß gewählt ist, dass während dessen Dauer eine Drehzahldifferenz zwischen den Schaltelementhälften des formschlüssigen Schaltelements (F) bestimmt und die Drehzahldifferenz unter einen bestimmten Wert geführt werden kann.

6. Verfahren nach Anspruch 1, **dadurch gekennzeichnet, dass** zwischen der ersten bestimmten Übersetzungsstufe ("7") und der zweiten bestimmten Übersetzungsstufe ("3") mindestens zwei benachbarte Übersetzungsstufen ("6", "5", "4") liegen.

7. Verfahren nach einem der vorangegangen Ansprüche, **dadurch gekennzeichnet, dass** bei einem Wechsel zwischen zwei aufeinanderfolgenden Übersetzungsstufen nur ein Schaltelement geöffnet und ein anderes Schaltelement geschlossen wird.

## Claims

1. Method for operating an automatic gearbox (1), comprising multiple frictionally locking shift elements (B, C, D, E) and at least one positively locking shift element (A, F), wherein, to realize a transmission ratio stage and thus a power flow through the automatic gearbox (1), at least three shift elements are closed, wherein, during a shift process between two particular transmission ratio stages ("7" and "3"), at least two shift elements (D, E) are opened and at least two further shift elements (B, F), comprising at least one positively locking (F) and at least one frictionally locking shift element (B), are closed, **characterized in that**, in the chronological sequence of the shift process, the closure of the positively locking shift element (F) takes place only after all frictionally locking shift elements (B) of the at least two further shift elements (B, F) have been closed.

2. Method according to Claim 1, **characterized in that** the shift process is a downshift.

3. Method according to Claim 2, **characterized in that** the change of the particular transmission ratio stages ("7" to "3") is performed in two successive downshifts ("7" to "4" and "4" to "3"), which can be performed in nested fashion such that, during the first downshift ("7" to "4"), at least one shift element (B) required for the subsequent, second downshift ("4" to "3") is prepared during the ongoing first downshift such that, when a synchronization point of the ongoing first downshift is reached, the subsequent, second downshift can be immediately executed, wherein the change in the transmission ratio stages is performed in an automatic gearbox with at least six shift elements, of which in each case at most three shift elements are closed for the transmission of torque or power in a forward gear ratio or in a reverse gear ratio, two successive downshifts can be performed by actuation of at least five shift elements such that, both during the first and during the second downshift, in each case one shift element must be opened and in each case one shift element must be closed in order to shift from the respective initial transmission ratio stage to the respective target transmission ratio stage, such that, in the nesting of the first and the second downshift, a first (D) and a second shift element (E) must be opened and a third (F) and a fourth (B) shift element must be closed in order to move from the initial transmission ratio stage of the first downshift ("7") to the target transmission ratio stage of the second downshift ("3"), wherein the third shift element (F) is of positively locking form and would have to be closed already to realize the target transmission ratio stage of the first downshift ("4"), and wherein the fourth shift element (B) is of frictionally locking form and is prepared during the first downshift for the activation during the second downshift, wherein, during the engagement of the target transmission ratio stage of the second downshift ("3"), firstly the prepared frictionally locking fourth shift element (B) is closed, and subsequently, the positively locking third shift element (F) is activated after the rotational speed difference of the shift element halves thereof has been determined and has been brought below a particular admissible value if the rotational speed difference lies above a particular upper limit.

4. Method according to Claim 3, **characterized in that** the rotational speed difference is brought below the particular value by virtue of a positive engine intervention being performed.

5. Method according to Claim 3 or 4, **characterized in that**, between a time (T5) at which the fourth shift element (B) as final frictionally locking shift element is closed and a time (T7) at which the closing process of the positively locking shift element begins, there is a particular time interval (Δt_C) which is selected to be of such a length that, during the duration thereof, a rotational speed difference between the shift element halves of the positively locking shift element (F) can be determined and the rotational speed difference can be brought below a particular value.

6. Method according to Claim 1, **characterized in that** at least two adjacent transmission ratio stages ("6", "5", "4") lie between the first particular transmission ratio stage ("7") and the second particular transmission ratio stage ("3").

7. Method according to one of the preceding claims, **characterized in that**, during a change between two successive transmission ratio stages, only one shift element is opened and one other shift element is closed.

## Revendications

1. Procédé pour faire fonctionner une boîte de vitesses automatique (1), comprenant plusieurs éléments de commutation par engagement par friction (B, C, D, E) et au moins un élément de commutation par engagement par correspondance de formes (A, F), dans lequel, pour réaliser un rapport de démultiplication et par conséquent un flux de forces à travers la boîte de vitesses automatique (1), au moins trois éléments de commutation sont fermés, dans le cas d'une opération de changement de vitesses entre deux rapports de démultiplication déterminés ("7" et "3"), au moins deux éléments de commutation (D, E) sont ouverts et au moins deux autres éléments de commutation (B, F) sont fermés, dont au moins un élément de commutation (F) est à engagement par correspondance de formes et au moins un élément de commutation (B) est à engagement par friction, **caractérisé en ce que** pendant le déroulement temporel de l'opération de changement de vitesses, la fermeture de l'élément de commutation à engagement par correspondance de formes (F) se produit seulement après la fermeture de tous les éléments de commutation par engagement par friction (B) des au moins deux autres éléments de commutation (B, F).

2. Procédé selon la revendication 1, **caractérisé en ce que** l'opération de changement de vitesses est un rétrogradage.

3. Procédé selon la revendication 2, **caractérisé en ce que** le changement des rapports de démultiplication déterminés ("7" après "3") s'effectue dans deux rétrogradages successifs ("7" après "4" et "4" après "3"), qui peuvent être réalisés de manière emboîtée, de telle sorte que lors du premier rétrogradage ("7" après "4"), au moins un élément de commutation (B) nécessaire pour le deuxième rétrogradage suivant ("4" après "3") soit préparé pendant le déroulement du premier rétrogradage, de telle sorte qu'à l'obtention d'un point de synchronisation du premier rétrogradage en cours, la réalisation immédiate du deuxième rétrogradage suivant soit possible, le changement des rapports de démultiplication étant effectué dans une boîte de vitesses automatique avec au moins six éléments de commutation, parmi lesquels, pour le transfert de couple ou de force dans une vitesse de marche avant ou dans une vitesse de marche arrière, à chaque fois au maximum trois éléments de commutation sont fermés, deux rétrogradages successifs pouvant être réalisés par commande d'au moins cinq éléments de commutation, de telle sorte qu'à la fois lors du premier et du deuxième rétrogradage, à chaque fois un élément de commutation doive être ouvert et à chaque fois un élément de commutation doive être fermé, pour commuter du rapport de démultiplication de départ respectif au rapport de démultiplication cible respectif, de sorte que lors de l'emboîtement du premier et du deuxième rétrogradage, un premier (D) et un deuxième (E) élément de commutation doivent être ouverts, et un troisième (F) et un quatrième (B) élément de commutation doivent être fermés, afin de parvenir du rapport de démultiplication de départ du premier rétrogradage ("7") au rapport de démultiplication cible du deuxième rétrogradage ("3"), le troisième élément de commutation (F) étant réalisé avec engagement par correspondance de formes et devrait déjà être fermé pour réaliser le rapport de démultiplication cible du premier rétrogradage ("4") et le quatrième élément de commutation (B) étant réalisé avec un engagement par friction et étant préparé pendant le premier rétrogradage en vue de la commutation par le deuxième rétrogradage, et lors de l'enclenchement du rapport de démultiplication cible du deuxième rétrogradage ("3"), le quatrième élément de commutation (B) à engagement par friction préparé étant d'abord fermé et ensuite, après que la vitesse de rotation différentielle a été déterminée par ses moitiés d'éléments de commutation, et si la vitesse de rotation différentielle est au-dessus d'une limite supérieure déterminée, après qu'elle a été amenée en dessous d'une valeur admissible déterminée, le troisième élément de commutation (F) à engagement par correspondance de formes est commuté.

4. Procédé selon la revendication 3, **caractérisé en ce que** la différence de vitesse de rotation est amenée en dessous de la valeur déterminée en effectuant une intervention positive sur le moteur.

5. Procédé selon la revendication 3 ou 4, **caractérisé en ce qu'**entre un instant (T5) auquel le quatrième élément de commutation (B) est fermé en tant que dernier élément de commutation à engagement par friction, et un instant (T7), auquel commence l'opération de fermeture de l'élément de commutation à engagement par correspondance de formes, se déroule un intervalle de temps déterminé (Δt_C), qui est sélectionné de manière à être suffisamment long pour que pendant sa durée, une différence de vitesse de rotation entre les moitiés d'éléments de commutation de l'élément de commutation à engagement par correspondance de formes (F) soit déterminée et que la différence de vitesse de rotation puisse être amenée en dessous d'une valeur déterminée.

6. Procédé selon la revendication 1, **caractérisé en ce qu'**entre le premier rapport de démultiplication déterminé ("7") et le deuxième rapport de démultiplication déterminé ("3") se trouvent au moins deux rapports de démultiplication adjacents ("6", "5", "4").

7. Procédé selon l'une quelconque des revendications précédentes, **caractérisé en ce que** dans le cas d'un changement entre deux rapports de démultiplication successifs, seulement un élément de commutation est ouvert et un autre élément de commutation est fermé.
